# EUROPEAN PATENT SPECIFICATION

(11) **EP 4 108 963 B1**
(45) Date of publication and mention of the grant of the patent: **18.11.2026**
(21) Application number: 21757157.9
(22) Date of filing: 17.02.2021
(51) Int. Cl.: F16K 11/07

(54) **SPOOL VALVE**
SPULENVENTIL
DISTRIBUTEUR À TIROIR CYLINDRIQUE

(30) Priority: 19.02.2020 JP 2020026388
(43) Date of publication of application: 28.12.2022
(73) Proprietor: Eagle Industry Co., Ltd., Minato-ku Tokyo 105-8587 (JP)
(72) Inventor: KAWATO Tadanobu, Tokyo 105-8587 (JP); NISHIMURA Naoki, Tokyo 105-8587 (JP); HOSHI Masaki, Tokyo 105-8587 (JP)
(74) Representative: WSL Patentanwälte Partnerschaft mbB
(86) International application number: PCT/JP2021/005975
(87) International publication number: WO 2021/166969

(56) References cited:
- CN-U- 208 503 125
- DE-A1- 3 226 809
- JP-A- 2014 238 169
- JP-U- S54 152 347
- JP-U- S6 034 154
- US-A- 4 313 467
- US-A1- 2009 032 753
- US-A1- 2013 153 068

## Description

### {TECHNICAL FIELD}

The present invention relates to a spool valve which is used for equipment of an automobile and the like and controls the pressure and flow rate of a control fluid in a fluid circuit.

### {BACKGROUND ART}

A spool valve controls the pressure and flow rate of a control fluid in a fluid circuit with a spool which is moved in an axial direction by the drive of a drive unit for which, for example, air, hydraulic pressure, a motor, a solenoid, or the like is used. A conventional spool valve is known which includes a spool placed in a sleeve and a drive unit disposed on one end side of the spool to generate a driving force in the axial direction with a solenoid, is provided between a pressure source such as a pump or an accumulator and a load, and supplies to the load a control fluid whose pressure and flow rate is adjusted by the movement of the spool (see Patent Citation 1).

Such a spool valve is provided with a spring for biasing the spool toward the drive unit, and the drive unit moves the spool against the urging force of the spring in the axial
direction, and the position of the spool relative to the sleeve is set as the target position, so that the flow path communicating the input port and the output port can be adjusted to have the target area for passage.

In Patent Citation 2 a piston valve construction is described which effects leakage reduction in a control valve for hydraulic steering systems by reducing the wetted circumference of a portion of a piston valve collar with the use of radial recesses therein diverting a portion of flow therefrom to a groove of the piston valve which effects smoothing of turbulence of flow from said recesses followed by flow from said groove through a throttling gap to effect a laminar flow.

Further, in Patent Citation 3 a spool valve is disclosed which includes a body defining a bore and a positionable spool located within the bore. The spool includes a central body portion having a diameter and a number of sealing lands separated by the central body portion. Each sealing land has a diameter larger than the central body portion diameter. A plurality of flow-shaping rings are located between first and second sealing lands, and each comprise an intermediate diameter larger than the central body portion diameter and smaller than the sealing land diameter.

A hydraulic directional control valve is described in Patent Citation 4 which has a longitudinal slide, at the piston section of which a wide and flat annular relief groove reduces the slide friction forces owing to radial applied forces on one side without significantly changing the flow characteristic. In the area of a bore section lying between two chambers, the piston section has a single annular relief groove of a few hundredths of a millimeter recess depth which is penetrated by a precision control notch. As a result of its large pressure-balancing surface, the flat annular groove centres the longitudinal slide in a hydraulically stable manner in the slide bore and, during the plunging into a chamber, leads less to disturbing discontinuities in the profile of the flow characteristic, as predetermined by the geometry of the precision control notch.

According to Patent Citation 5 a plunger is axially intersectable with a tubular recessed portion formed in a magnetically attracting core of a stator core upon slide movement of the plunger, which places a predetermined portion of the plunger into the tubular recessed portion. A magnetic material in the predetermined portion of the plunger may have a predetermined outer diameter that is smaller than an outer diameter of the magnetic material in a slidably contacting portion of the plunger, which slidably contacts a slidable core of the stator core. Alternatively, a magnetic material in the tubular recessed portion may have a predetermined inner diameter that is larger than an inner diameter of the magnetic material in a slidably contacting portion of the slidable core, which slidably contacts the plunger.

### {CITATION LIST}

### {Patent Literature}

Patent Citation 1: JP 2001 - 263529 A (Page 3, FIG. 1)
Patent Citation 2: US 4 313 467 A
Patent Citation 3: US 2013/153068 A1
Patent Citation 4: DE 32 26 809 A1
Patent Citation 5: US 2009/032753 A1

### {SUMMARY OF INVENTION}

### {Technical Problem}

In the spool valve described in Patent Citation 1, the slidability of the spool may deteriorate at the time of starting the spool valve. This is obvious when a high-pressure fluid is used, and it is thought to be because the fluid accumulated in the narrow gap between the outer peripheral surface of the spool and the inner peripheral surface of the sleeve is likely to change in quality due to a long-term stop state or a temperature drop, or because the high-pressure fluid presses the spool biased in a circumferential direction against the inner surface of the sleeve.

The present invention has been made in view of such a problem, and an object of the present invention is to provide a spool valve capable of operating a spool smoothly.

### {Solution to Problem}

In order to solve the problem described above, a spool valve according to the present invention a spool valve including: a spool formed into a columnar shape having a circular cross section and having a plurality of land portions; a sleeve that has the spool housed therein in such a manner that the spool is movable in an axial direction and that has an input port and an output port and further has small-diameter portions in the interior of the sleeve, pressure and flow rate of a fluid passing between the land portions and the small-diameter portions being adjustable by movement of the spool; a plurality of adjustment portions formed as gaps between the small-diameter portions of the sleeve and the land portions of the spool overlapping with each other in a view from a radial direction of the spool; the spool includes a first land portion having an end surface of one side of the spool in the axial direction, a first small diameter portion formed having a smaller diameter than the first land portion, a second land portion formed having a larger diameter than the first small-diameter portion of the spool, and a third land portion formed having a smaller diameter than the second land portion in order from the one side to the other side in the axial direction, the spool valve further comprises a guide portion constituted by the gap between the small-diameter portion and the third land portion which define one of the adjustment portions having the gap smaller than each of the gaps of adjacent two of the adjustment portions having the input port interposed therebetween in the axial direction, wherein adjacent two of the adjustment portions having the input port interposed therebetween in the axial direction are defined by one land portion which is the second land portion. According to the aforesaid feature of the present invention, the fluid can be released through the adjacent adjustment portions on opposite sides of the input port in the axial direction at startup, and the spool can be guided in the axial direction by the guide portion, so that the spool can be operated smoothly.

It may be preferable that the adjustment portion constituted by the guide portion is provided axially adjacent to one of the two of the adjustment portions having the input port interposed therebetween in the axial direction. According to this preferable configuration, the distance in the axial direction between the input port into which the fluid flows and the guide portion is short, so that the tilt of the spool can be prevented to operate the spool smoothly.

It may be preferable that the adjustment portion constituted by the guide portion has a smallest cross-sectional area among the adjustment portions. According to this preferable configuration, the tilt of the spool can be prevented to operate the spool smoothly.

It may be preferable that the land portion constituting the guide portion is one of the land portions disposed closest to a spring for biasing the spool. According to this preferable configuration, the tilt of the spool can be further prevented to operate the spool smoothly.

It may be preferable that the one of the adjustment portions is either of adjacent two of the adjustment portions having the input port and the output port interposed therebetween in the axial direction. According to this preferable configuration, the spool is supported by the guide portions at two locations separated from each other in the axial direction, so that the tilt of the spool can be prevented to operate the spool smoothly.

It may be preferable that the land portion partially forming the guide portion has a longest size in the axial direction among the land portions. According to this preferable configuration, the contact area between the land portion and the small-diameter portion which constitute the guide portion can be increased, so that the pressing force of the land portion against the small-diameter portion can be dispersed to operate the spool smoothly.

### {BRIEF DESCRIPTION OF DRAWINGS}

FIG. 1 is a partial cross-sectional view showing a spool valve according to a first embodiment of the present invention.
FIG. 2 is an enlarged cross-sectional view showing a valve portion during an off-state of the spool valve according to the first embodiment of the present invention.
FIG. 3 is an enlarged cross-sectional view showing the valve portion during an on-state of the spool valve according to the first embodiment of the present invention.
FIG. 4 is an enlarged cross-sectional view showing a valve portion during an off-state of a spool valve according to a second embodiment of the present invention.

### {DESCRIPTION OF EMBODIMENTS}

Modes for carrying out a spool valve according to the present invention will be described below based on embodiments.

### {First embodiment}

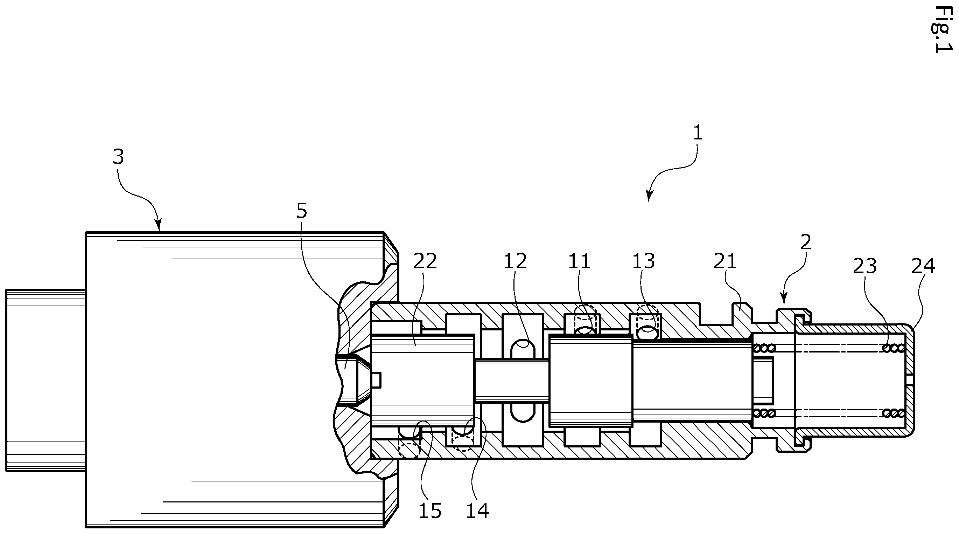

A spool valve according to a first embodiment of the present invention will be described with reference to FIGS. 1 to 3. Hereinafter, the left and right sides when viewed from the front side of FIG. 1 will be described as the left and right sides of the spool valve.

A spool valve 1 is used for hydraulically controlled equipment such as an automatic transmission of a vehicle, and controls the pressure and flow rate of a control fluid such as hydraulic oil in a fluid circuit.

As shown in FIG. 1, the spool valve 1 is configured such that a valve portion 2 for adjusting the flow rate of a fluid as a valve is integrally attached to a drive unit 3 with a solenoid. The drive unit 3 according to the embodiment has a general solenoid configuration, and detailed description thereof will be omitted.

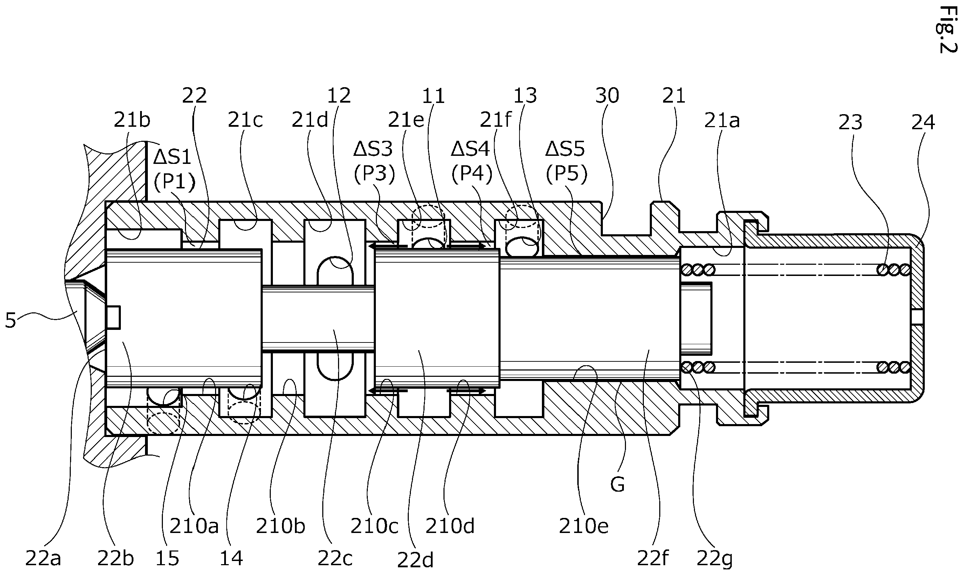

As shown in FIGS. 1 and 2, the spool valve 1 according to the embodiment is a normally closed type spool valve in which the flow path between an input port 11 and an output port 12 is blocked during an off-state in which the coil of a solenoid (not shown) is not energized.

As shown in FIG. 1, the valve portion 2 mainly includes a cylindrical sleeve 21, a spool 22 which is liquid-tightly placed inside the sleeve 21 and is movable in an axial direction, a coil-shaped spring 23 which is attached to the right end of the spool 22 in the axial direction and biases the spool 22 to the left in the axial direction, and a retainer 24 caulked and fixed to the right end of the sleeve 21 in the axial direction to retain the spring 23. The sleeve 21, the spool 22, and the retainer 24 are made of materials such as aluminum, iron, stainless steel, and resin.

As shown in FIGS. 1 to 3, the sleeve 21 is formed in a cylindrical shape with opposite ends in the axial direction open, and is provided with the input port 11, the output port 12, a feedback port 13, a discharge port 14, and a breathing port 15 which extend through the sleeve 21 in a radial direction.

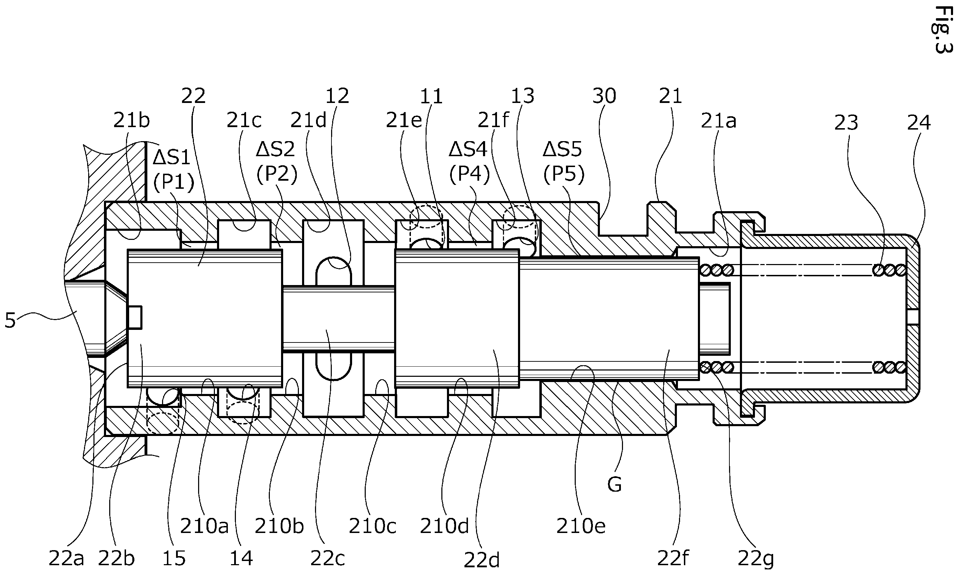

As shown in FIGS. 2 and 3, the sleeve 21 is provided with a through hole 21a in which the spool 22 is placed so as to be movable in the axial direction. The inner peripheral surface of the sleeve 21, that is, the inner peripheral surface of the through hole 21a is formed into a circle in cross section.

The through hole 21a is provided, on the inner peripheral surface, with a first annular recess 21b to which the breathing port 15 is open, a second annular recess 21c to which the discharge port 14 is open, and a third annular recess 21d to which the output port 12 is open, a fourth annular recess 21e to which the input port 11 is open, and a fifth annular recess 21f to which the feedback port 13 is open in order from the left side in the axial direction to the right side in the axial direction. The feedback port 13 is in communication with the output port 12 via a throttle (not shown) in the outer peripheral portion of the sleeve 21.

Further, the through hole 21a is provided, on the inner peripheral surface, with a first small-diameter portion 210a formed between the first annular recess 21b and the second annular recess 21c, a second small-diameter portion 210b formed between the second annular recess 21c and the third annular recess 21d, a third small-diameter portion 210c formed between the third annular recess 21d and the fourth annular recess 21e, a fourth small-diameter portion 210d formed between the fourth annular recess 21e and the fifth annular recess 21f, and a fifth small-diameter portion 210e formed on the right side of the fifth annular recess 21f in the axial direction. The small-diameter portions are disposed corresponding to land portions of the spool 22 described later.

In the embodiment, adjustment portions P (P1, P2, P3, P4, P5) mean spaces between the small-diameter portions of the sleeve and the land portions of the spool in parts in which they overlap in the radial direction (hereinafter, the "land portions which overlap the small-diameter portions in the radial direction" are also referred to as the "land portions corresponding to the small-diameter portions"), and the inner and outer peripheries of the adjustment portions P are defined by the land portions of the spool and the small-diameter portions of the sleeve. Area differences ΔS (i.e., ΔS1, ΔS2, ΔS3, ΔS4, ΔS5) between the inner diameter cross-sectional areas in the small-diameter portions of the sleeve which define the adjustment portions P and the outer diameter cross-sectional areas of the land portions which overlap the small-diameter portions in the radial direction, that is, the cross-sectional areas of the adjustment portions P will be referred to below.

For example, in the embodiment, the small-diameter portions defining the adjustment portions P3 and P4 on opposite sides of the input port 11 in the axial direction are the third small-diameter portion 210c and the fourth small-diameter portion 210d.

Further, in the embodiment, the small-diameter portion defining the adjustment portion P5 is the fifth small-diameter portion 210e, which constitutes the guide portion G. The guide portion G is constituted by the small-diameter portion and the land portion which define the adjustment portion having the smallest area difference ΔS among the adjustment portions P. In other words, the guide portion G defines the adjustment portion having the smallest area difference ΔS.

Further, in the embodiment, the inner diameters of the first small-diameter portion 210a, the second small-diameter portion 210b, the third small-diameter portion 210c, and the fourth small-diameter portion 210d are configured to have substantially the same diameter, and the inner diameter of the fifth small-diameter portion 210e is configured to be smaller than the inner diameters of the small-diameter portions described above.

As shown in FIGS. 2 and 3, according to the claimed invention, the spool 22 is formed into a columnar shape having a circular cross section, and mainly includes a first land portion 22b having a left end surface 22a of the spool 22 in the axial direction, a first small-diameter portion 22c formed having a smaller diameter than the first land portion 22b, a second land portion 22d formed having a larger diameter than the first small-diameter portion 22c, and a third land portion 22f formed having a smaller diameter than the second land portion 22d in order from the left side in the axial direction to the right side in the axial direction.

In the embodiment, and according to the claimed invention, the land portion defining the adjustment portions P3 and P4 on opposite sides of the input port 11 in the axial direction is the second land portion 22d.

Further, in the embodiment, and according to the claimed invention, land portion defining the adjustment portion P5 in the guide portion G is the third land portion 22f. In the embodiment, the guide portion G is constituted by the fifth small-diameter portion 210e of the sleeve 21 and the third land portion 22f of the spool 22.

In the first embodiment, the outer diameter of the first land portion 22b and the outer diameter of the second land portion 22d are configured to be substantially the same diameter, and the outer diameter of the third land portion 22f is configured to be smaller than the outer diameters of the first land portion 22b and the second land portion 22d.

The left end surface 22a of the spool 22 in the axial direction is in contact with the right end surface of the rod 5 in the axial direction which constitutes the drive unit 3. As shown in FIG. 3, during an on-state of the spool valve 1, the spool 22 is movable in the axial direction together with the rod 5.

An annular surface portion 22g formed on the right end surface of the third land portion 22f of the spool 22 in the axial direction is in contact with one end of the coil-shaped spring 23 for biasing the spool 22 to the left in the axial direction. The spring 23 is compressed and retained between the annular surface portion 22g of the third land portion 22f and the retainer 24 caulked and fixed to the right end portion of the sleeve 21 in the axial direction.

Slight gaps are provided in the radial direction between the inner peripheral surfaces of the first small-diameter portion 210a, the second small-diameter portion 210b, the third small-diameter portion 210c, the fourth small-diameter portion 210d, and the fifth small-diameter portion 210e of the sleeve 21, and the outer peripheral surfaces of the first land portion 22b, the second land portion 22d, and the third land portion 22f of the spool 22, so that the spool 22 is smoothly movable in the axial direction.

Specifically, during the off-state of the spool valve 1 shown in FIG. 2, the area difference ΔS3 (= ID₃ - OD₂) between an inner diameter cross-sectional area ID₃ in the third small-diameter portion 210c defining the adjustment portion P3 on the left side of the input port 11 in the axial direction, and an outer diameter cross-sectional area OD₂ of the second land portion 22d corresponding to the third small-diameter portion 210c, and the area difference ΔS4 (= ID₄ - OD₂) between an inner diameter cross-sectional area ID₄ in the fourth small-diameter portion 210d defining the adjustment portion P4 on the right side of the input port 11 in the axial direction, and an outer diameter cross-sectional area OD₂ of the second land portion 22d corresponding to the fourth small-diameter portion 210d are configured to be substantially the same (ΔS3 = ΔS4).

Further, the area difference ΔS5 (= ID₅ - OD₃) between an inner diameter cross-sectional area ID₅ in the fifth small-diameter portion 210e defining the adjustment portion P5 in the guide portion G and an outer diameter cross-sectional area OD₃ of the third land portion 22f corresponding to the fifth small-diameter portion 210e is configured to be smaller than the area differences ΔS3 and ΔS4 described above in the adjustment portions P3 and P4 on opposite sides of the input port 11 in the axial direction (ΔS3 = ΔS4 > ΔS5).

During the off-state of the spool valve 1, the area difference ΔS1(= ID₁ - OD₁) between an inner diameter cross-sectional area ID₁ in the first small-diameter portion 210a defining the adjustment portion P1 and an outer diameter cross-sectional area OD₁ of the first land portion 22b corresponding to the first small-diameter portion 210a is configured to be substantially the same as the area differences ΔS3 and ΔS4 in the adjustment portions P3 and P4 on opposite sides of the input port 11 in the axial direction (ΔS1 = ΔS3 = ΔS4).

That is, during the off-state of the spool valve 1 according to the first embodiment, the adjustment portion P5 in the guide portion G is configured to have the smallest area difference ΔS5.

During the on-state of the spool valve 1 shown in FIG. 3, the area difference ΔS2 (= ID₂ - OD₁) between an inner diameter cross-sectional area ID₂ in the second small-diameter portion 210b defining the adjustment portion P2 and the outer diameter cross-sectional area OD₁ of the first land portion 22b corresponding to the second small-diameter portion 210b is configured to be substantially the same as the area difference ΔS1 of the adjustment portion P1 (i.e., ΔS1 = ΔS2).

That is, the adjustment portion P5 in the guide portion G is configured to have the smallest area difference ΔS5 among all the adjustment portions P in the spool valve 1 according to the first embodiment.

Accordingly, the spool 22 is guided in the axial direction with the outer peripheral surface of the third land portion 22f supported by the inner peripheral surface of the fifth small-diameter portion 210e of the sleeve 21, so that the spool 22 is smoothly movable.

Further, the area differences ΔS3 and ΔS4 in the adjustment portions P3 and P4 on opposite sides of the input port 11 in the axial direction are configured to be larger than the area difference ΔS5 in the adjustment portion P5 in the guide portion G. Accordingly, even when the flow path between the input port 11 and the output port 12 is blocked by the second land portion 22d during the off-state of the spool valve 1, a part of the fluid in the fourth annular recess 21e to which the input port 11 is open can flow through the gaps on opposite sides of the input port 11 in the axial direction to the third annular recess 21d and the fifth annular recess 21f which are adjacent to the fourth annular recess 21e in the axial direction (see the black arrows in FIG. 2).

During the off-state and the operating state of the spool valve 1, the amount of fluid flowing from the fourth annular recess 21e to the third annular recess 21d and the fifth annular recess 21f is set so as not to affect the control of the pressure and flow rate of the control fluid in the fluid circuit.

Accordingly, at the time of starting the spool valve 1, the fluid in the fourth annular recess 21e can be released through the adjustment portions P3 and P4 on opposite sides of the input port 11 in the axial direction, that is, the gaps between the inner peripheral surfaces of the third small-diameter portion 210c and the fourth small-diameter portion 210d of the sleeve 21 and the outer peripheral surface of the second land portion 22d of the spool 22 corresponding to the third small-diameter portion 210c and the fourth small-diameter portion 210d, and the outer peripheral surface of the third land portion 22f of the spool 22 which defines the adjustment portion P5 in the guide portion G can be supported by the inner peripheral surface of the fifth small-diameter portion 210e of the sleeve 21 to guide the spool 22 in the axial direction, so that the spool 22 can be operated smoothly.

Further, the spool valve 1 is of a normally closed type and has such a structure that it is easily affected by the fluid accumulated in the gaps on opposite sides of the input port 11 in the axial direction at the time of stating the spool valve 1. However, as described above, since the fluid can be released from the inside of the fourth annular recess 21e to the third annular recess 21d and the fifth annular recess 21f at startup, the responsiveness of the spool valve 1 is effectively enhanced.

Further, even when a high-pressure fluid flows from the input port 11 into the fourth annular recess 21e in the sleeve 21 at the time of starting the spool valve 1, a part of the high-pressure fluid is released from the inside of the fourth annular recess 21e to the third annular recess 21d and the fifth annular recess 21f through the gaps in the adjustment portions P3 and P4 on opposite sides of the input port 11 in the axial direction to prevent an excessive increase in pressure in the fourth small-diameter portion 210d and to weaken the pressing force against the outer peripheral surface of the third land portion 22f which is supported by the inner peripheral surface of the fifth small-diameter portion 210e defining the adjustment portion P5 in the guide portion G, facilitating the smooth operation of the spool 22.

Further, both the outer peripheral surface of the spool 22 and the inner peripheral surface of the sleeve 21 have a circular cross section. Accordingly, a gap between the outer peripheral surface of the spool 22 and the inner peripheral surface of the sleeve 21 is formed in a well-balanced manner in the circumferential direction, so that the spool 22 is less likely to be affected by the fluid in the sleeve 21 and the operation of the spool 22 can be stabilized.

Further, the adjustment portion P5 in the guide portion G is provided axially adjacent to the adjustment portion P4 on the right side of the input port 11 in the axial direction. Accordingly, the axial distance between the fourth annular recess 21e to which the input port 11 is open, into which the high-pressure fluid flows, and the fifth small-diameter portion 210e defining the adjustment portion P5 in the guide portion G can be shortened, so that the tilt of the spool 22 can be prevented to operate the spool 22 smoothly.

Further, in the spool valve 1, the adjustment portion P5 in the guide portion G has the smallest area difference ΔS5. Accordingly, the adjustment portion P5 in the guide portion G has the smallest gap, and the outer peripheral surface of the third land portion 22f is immediately brought into contact with the inner peripheral surface of the fifth small-diameter portion 210e by the tilt of the spool 22, so that the tilt of the spool 22 can be prevented to operate the spool 22 smoothly.

Further, the third land portion 22f defining the adjustment portion P5 in the guide portion G has the annular surface portion 22g formed on the right end surface in the axial direction thereof, which is in contact with one end of the spring 23 for biasing the spool 22. That is, the third land portion 22f is disposed closest to the spring 23 among the land portions of the spool 22. Accordingly, in the adjustment portion P5 in the guide portion G, the outer peripheral surface of the third land portion 22f, which is highly aligned by the spring 23, is guided by the inner peripheral surface of the fifth small-diameter portion 210e, so that the tilt of the spool 22 can be further prevented to operate the spool 22 smoothly.

Further, the third land portion 22f defining the adjustment portion P5 in the guide portion G is configured to have the longest size in the axial direction among the land portions of the spool 22. Accordingly, the contact area between the outer peripheral surface of the third land portion 22f and the inner peripheral surface of the fifth small-diameter portion 210e which define the adjustment portion P5 in the guide portion G can be increased, so that the pressing force of the third land portion 22f against the fifth small-diameter portion 210e due to the high-pressure fluid flowing from the input port 11 can be dispersed to operate the spool 22 smoothly.

A groove 30 into which a retaining pin (not shown) is inserted when the spool valve 1 is installed in the equipment is provided in an outer peripheral portion of the sleeve 21 corresponding to a part of the fifth small-diameter portion 210e which defines the adjustment portion P5 in the guide portion G and is configured to have the longest size in the axial direction. Accordingly, the size of the valve portion 2 in the axial direction can be configured to be compact.

Further, the inner diameters of the first small-diameter portion 210a, the second small-diameter portion 210b, the third small-diameter portion 210c, and the fourth small-diameter portion 210d on the inner peripheral surface of the sleeve 21 are configured to be substantially the same diameter, and the outer diameters of the first land portion 22b, the second land portion 22d, and the third land portion 22f of the spool 22 can be changed, facilitating the processing of the sleeve 21 and the spool 22 at the time of manufacturing the spool valve 1.

### {Second embodiment}

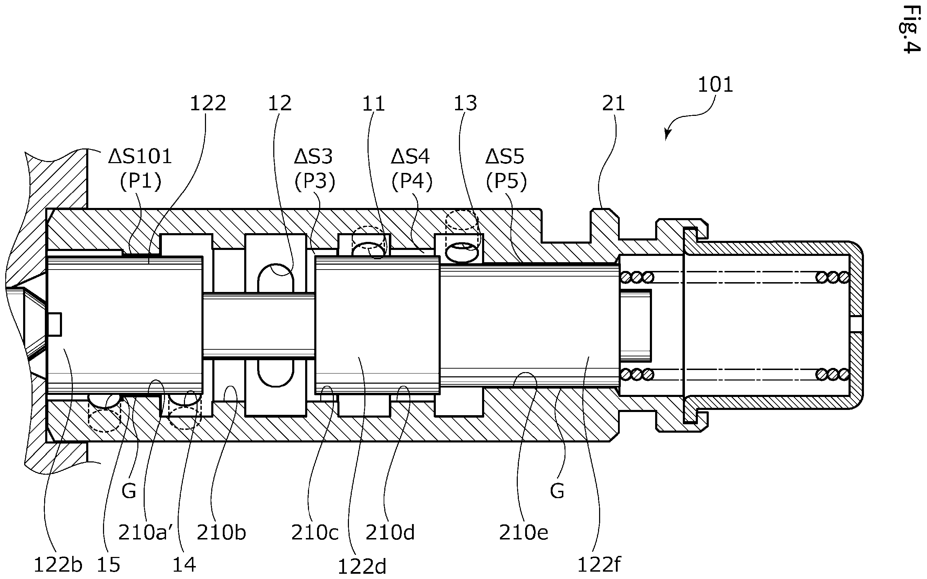

Next, a spool valve according to a second embodiment of the present invention will be described with reference to FIG. 4. The description of the same configuration as the first embodiment described above and the overlapping configuration will be omitted.

As shown in FIG. 4, in a spool valve 101 according to the second embodiment, the outer diameters of a first land portion 122b and a second land portion 122d of a spool 122 are configured to be substantially the same, and the outer diameter of a third land portion 122f are configured to be smaller than the outer diameters of the first land portion 122b and the second land portion 122d.

Further, the inner diameter of a first small-diameter portion 210a' is configured to be smaller than the inner diameters of the second small-diameter portion 210b, the third small-diameter portion 210c, and the fourth small-diameter portion 210d, and to be larger than the inner diameter of the fifth small-diameter portion 210e.

Specifically, during the off-state of the spool valve 101 shown in FIG. 4, the area difference ΔS101 (= ID₁₀₁ - OD₁) between an inner diameter cross-sectional area ID₁₀₁ in the first small-diameter portion 210a' defining the adjustment portion P1 and an outer diameter cross-sectional area OD₁ of the first land portion 122b corresponding to the first small-diameter portion 210a', and the area difference ΔS5 (= ID₅ - OD₃) between the inner diameter cross-sectional area ID₅ in the fifth small-diameter portion 210e defining the adjustment portion P5 in the guide portion G and the outer diameter cross-sectional area OD₃ of the third land portion 122f corresponding to the fifth small-diameter portion 210e are configured to be substantially the same (ΔS101 = ΔS5).

That is, in the spool valve 101 according to the second embodiment, the adjustment portions P1 and P5 having the smallest area difference ΔS are provided in the adjustment portions on opposite sides of the input port 11 and the output port 12 in the axial direction with the input port 11 and the output port 12 interposed therebetween.

Accordingly, a spool 122 is supported by the adjustment portions P1 and P5 at two guide portions G separated from each other in the axial direction, so that the tilt of the spool 122 can be prevented to operate the spool 122 smoothly.

The area difference ΔS101 in the adjustment portion P1 is not limited to the one configured to be substantially the same as the area difference ΔS5 in the adjustment portion P5 in the guide portion G on the right side in the axial direction, and as long as it is the one configured to be smaller than the area differences ΔS3 and ΔS4 in the adjustment portions P3 and P4 on opposite sides of the input port 11 in the axial direction, it may be configured to be slightly larger than the area difference ΔS5 in the adjustment portion P5 in the guide portion G.

Although embodiments of the present invention have been described above with reference to the drawings, the specific configuration is not limited to these embodiments, and any changes or additions without departing from the scope of the present invention as defined by the appended claims are included in the present invention.

For example, in the embodiments described above, the solenoid has been described as being used as the drive unit of the spool valve, but the present invention is not limited to this, and air, hydraulic pressure, a motor or the like may be selected as the drive unit of the spool valve.

Further, in the embodiments described above, the through hole of the sleeve has been described as being provided, on the inner peripheral surface, with the first annular recess to which the breathing port is open, the second annular recess to which the discharge port is open, the third annular recess to which the output port is open, the fourth annular recess to which the input port is open, and the fifth annular recess to which the feedback port is open in order from the left side in the axial direction to the right side in the axial direction, but the present invention is not limited to this, and the correspondence relationship between the ports and the annular recesses may be appropriately changed depending on the configuration of the fluid circuit of the equipment and the like. For example, when the spool valve is of a normally closed type as in the embodiments described above, the breathing port, the feedback port, the input port, the output port, and the discharge port may be formed corresponding to respective annular recesses in order from the left side in the axial direction to the right side in the axial direction.

Further, when the spool valve is of a normally open type, the breathing port, the feedback port, the discharge port, the output port, and the input port, or the breathing port, the input port, the output port, the discharge port, and the feedback port may be formed corresponding to the respective annular recesses in order from the left side in the axial direction to the right side in the axial direction.

Further, in the embodiments described above, the mode in which the fluid in the fourth annular recess is released through the gaps in the adjustment portions on opposite sides of the input port in the axial direction to the third annular recess and the fifth annular recess at the time of starting the spool valve has been described, but the present invention is limited to this, and one in which the fluid in the fourth annular recess can be released through at least one of the gaps in the adjustment portions on opposite sides of the input port in the axial direction may be applicable.

Further, in the embodiments described above, the mode in which the area differences in the adjustment portions on opposite sides of the input port in the axial direction is configured to have substantially the same size has been described, but the area differences in the adjustment portions on opposite sides of the input port in the axial direction may be different from each other as long as they are larger than the area difference in the adjustment portion in the guide portion. For example, when the area difference in the adjustment portion on the right side of the input port in the axial direction is configured to be larger than the area difference in the adjustment portion on the left side of the input port in the axial direction, the larger amount of the fluid in the fourth annular recess can be released toward the fifth annular recess to which the feedback port is open to prevent the leakage of the control fluid into the third annular recess to which the output port is open.

Further, on the other hand, when the area difference in the adjustment portion on the left side of the input port in the axial direction is configured to be larger than the area difference in the adjustment portion on the right side of the input port in the axial direction, the larger amount of the fluid in the fourth annular recess can be released to the third annular recess to which the output port is open to facilitate the discharge of the altered fluid in the sleeve to the outside through the output port and the discharge port at startup.

Further, in an embodiment not covered by the claims, the outer peripheral surface of the spool and the inner peripheral surface of the sleeve are not limited to those having a circular cross section, and may have, for example, an elliptical cross section, a polygonal cross section, or the like.

Further, the adjustment portion in the guide portion having the smallest area difference may not be axially adjacent to the adjustment portions on opposite sides of the input port in the axial direction.

Further, the land portion which defines the adjustment portion in the guide portion having the smallest area difference is not limited to the one configured to have the longest size in the axial direction, and may have substantially the same size in the axial direction as the other land portions and may be configured to have the shortest size in the axial direction.

Further, in the embodiments described above, the three land portions have described as being formed in the sleeve, but the number of land portions may be two (in an embodiment not covered by the claims) or more.

Further, the inner diameters of the small-diameter portions may be configured to have the different diameter, or two or more of the small-diameter portions may be configured to have the same diameter.

### {REFERENCE SIGNS LIST}

1 spool valve
2 valve portion
3 drive unit
11 input port
12 output port
13 feedback port
14 discharge port
15 breathing port
21 sleeve
21a through hole
21b first annular recess
21c second annular recess
21d third annular recess
21e fourth annular recess
21f fifth annular recess
22 spool
22b first land portion
22c first small-diameter portion
22d second land portion
22f third land portion (land portion constituting guide portion)
23 spring
101 spool valve
122 spool
122b first land portion
122d second land portion
122f third land portion (land portion constituting guide portion)
210a first small-diameter portion
210a' first small-diameter portion (small-diameter portion constituting guide portion)
210b second small-diameter portion
210c third small-diameter portion
210d fourth small-diameter portion
210e fifth small-diameter portion (small-diameter portion constituting guide portion)
G guide portion
P adjustment portion
ΔS area difference

## Claims

1. A spool valve (1, 101) comprising:
a spool (22, 122) formed into a columnar shape having a circular cross section and having a plurality of land portions (22b, 22d, 22f, 122b, 122d, 122f);
a sleeve (21) that has the spool (22, 122) housed therein in such a manner that the spool (22, 122) is movable in an axial direction and that has an input port (11) and an output port (12) and further has small-diameter portions (210a, 210a', 210b, 210c, 210d, 210e) in an interior of the sleeve (21), wherein pressure and flow rate of a fluid passing between the land portions (22b, 22d, 22f, 122b, 122d, 122f) and the small-diameter portions (210a, 210a', 210b, 210c, 210d, 210e) are adjustable by movement of the spool (22, 122);
a plurality of adjustment portions (P) formed as gaps between the small-diameter portions (210a, 210a', 210b, 210c, 210d, 210e) of the sleeve (21) and the land portions (22b, 22d, 22f, 122b, 122d, 122f) of the spool (22, 122) overlapping with each other in a view from a radial direction of the spool (22, 122);
wherein the spool (22, 122) includes a first land portion (22b, 122b) having an end surface (22a) of one side of the spool (22, 122) in the axial direction, a first small diameter portion (22c) formed having a smaller diameter than the first land portion (22b, 122b), a second land portion (22d, 122d) formed having a larger diameter than the first small-diameter portion (22c) of the spool (22, 122), and a third land portion (22f, 122f) formed having a smaller diameter than the second land portion (22d, 122d) in order from the one side to the other side in the axial direction,
wherein
adjacent two of the adjustment portions (P3, P4) having the input port (11) interposed therebetween in the axial direction are defined by one land portion which is the second land portion (22d, 122d),
**characterized in that**
the spool valve (1, 101) further comprises a guide portion (G) constituted by the gap between one of the small-diameter portions (210e) of the sleeve (21) and the third land portion (22f, 122f) which define one of the adjustment portions (P5) having the gap smaller than each of the gaps of the adjacent two adjustment portions (P3, P4) having the input port (11) interposed therebetween in the axial direction.

2. The spool valve (1) according to claim 1, wherein
the adjustment portion (P5) constituted by the guide portion (G) is provided axially adjacent to one of the two of the adjustment portions (P3, P4) having the input port (11) interposed therebetween in the axial direction.

3. The spool valve (1) according to claim 1 or 2, wherein
the adjustment portion (P5) constituted by the guide portion (G) has a smallest gap among the adjustment portions (P).

4. The spool valve (1) according to any one of claims 1 to 3, wherein
the third land portion (22f, 122f) constituting the guide portion (G) is one of the land portions (22b, 22d, 22f, 122b,122d, 122f) disposed closest to a spring (23) for biasing the spool (22, 122).

5. The spool valve (1) according to any one of claims 1 to 4, wherein
the third land portion (22f, 122f) partially forming the guide portion has a longest size in the axial direction among the land portions (22b, 22d, 22f, 122b, 122d, 122f).

## Patentansprüche

1. Schieberventil (1, 101), umfassend:
einen Ventilschieber (22, 122), der in einer säulenförmigen Gestalt mit einem kreisförmigen Querschnitt ausgebildet ist und eine Mehrzahl von Bundabschnitten (22b, 22d, 22f, 122b, 122d, 122f) aufweist;
eine Hülse (21), in der der Ventilschieber (22, 122) derart aufgenommen ist, dass der Ventilschieber (22, 122) in einer axialen Richtung beweglich ist, und die eine Eingangsöffnung (11) und eine Ausgangsöffnung (12) aufweist und ferner Abschnitte mit kleinem Durchmesser (210a, 210a', 210b, 210c, 210d, 210e) in einem Inneren der Hülse (21) aufweist, wobei Druck und Durchflussrate eines Fluids, das zwischen den Bundabschnitten (22b, 22d, 22f, 122b, 122d, 122f) und den Abschnitten mit kleinem Durchmesser (210a, 210a', 210b, 210c, 210d, 210e) hindurchtritt, durch Bewegung des Ventilschiebers (22, 122) einstellbar sind;
eine Mehrzahl von Einstellabschnitten (P), die als Spalte zwischen den Abschnitten mit kleinem Durchmesser (210a, 210a', 210b, 210c, 210d, 210e) der Hülse (21) und den Bundabschnitten (22b, 22d, 22f, 122b, 122d, 122f) des Ventilschiebers (22, 122) ausgebildet sind, die einander bei einer Betrachtung aus einer radialen Richtung des Ventilschiebers (22, 122) überlappen;
wobei der Ventilschieber (22, 122) einen ersten Bundabschnitt (22b, 122b), der eine Endfläche (22a) einer Seite des Ventilschiebers (22, 122) in der axialen Richtung aufweist, einen ersten Abschnitt mit kleinem Durchmesser (22c), der mit einem kleineren Durchmesser als der erste Bundabschnitt (22b, 122b) ausgebildet ist, einen zweiten Bundabschnitt (22d, 122d), der mit einem größeren Durchmesser als der erste Abschnitt mit kleinem Durchmesser (22c) des Ventilschiebers (22, 122) ausgebildet ist, und einen dritten Bundabschnitt (22f, 122f), der mit einem kleineren Durchmesser als der zweite Bundabschnitt (22d, 122d) ausgebildet ist, in der Reihenfolge von der einen Seite zu der anderen Seite in der axialen Richtung umfasst,
wobei zwei benachbarte der Einstellabschnitte (P3, P4), zwischen denen die Eingangsöffnung (11) in der axialen Richtung angeordnet ist, durch einen Bundabschnitt definiert sind, der der zweite Bundabschnitt (22d, 122d) ist,
**dadurch gekennzeichnet, dass**
das Schieberventil (1, 101) ferner einen Führungsabschnitt (G) umfasst, der durch den Spalt zwischen einem der Abschnitte mit kleinem Durchmesser (210e) der Hülse (21) und dem dritten Bundabschnitt (22f, 122f) gebildet ist, die einen der Einstellabschnitte (P5) definieren, dessen Spalt kleiner als jeder der Spalte der zwei benachbarten Einstellabschnitte (P3, P4) ist, zwischen denen die Eingangsöffnung (11) in der axialen Richtung angeordnet ist.

2. Schieberventil (1) nach Anspruch 1, wobei
der durch den Führungsabschnitt (G) gebildete Einstellabschnitt (P5) axial benachbart zu einem der zwei der Einstellabschnitte (P3, P4) vorgesehen ist, zwischen denen die Eingangsöffnung (11) in der axialen Richtung angeordnet ist.

3. Schieberventil (1) nach Anspruch 1 oder 2, wobei
der durch den Führungsabschnitt (G) gebildete Einstellabschnitt (P5) einen kleinsten Spalt unter den Einstellabschnitten (P) aufweist.

4. Schieberventil (1) nach einem der Ansprüche 1 bis 3, wobei
der dritte Bundabschnitt (22f, 122f), der den Führungsabschnitt (G) bildet, einer der Bundabschnitte (22b, 22d, 22f, 122b,122d, 122f) ist, der einer Feder (23) zum Vorspannen des Ventilschiebers (22, 122) am nächsten angeordnet ist.

5. Schieberventil (1) nach einem der Ansprüche 1 bis 4, wobei
der dritte Bundabschnitt (22f, 122f), der den Führungsabschnitt teilweise bildet, eine längste Abmessung in der axialen Richtung unter den Bundabschnitten (22b, 22d, 22f, 122b, 122d, 122f) aufweist.

## Revendications

1. Distributeur à tiroir cylindrique (1, 101) comprenant :
un tiroir cylindrique (22, 122) formé en forme de colonne présentant une section transversale circulaire et présentant une pluralité de parties d'appui (22b, 22d, 22f, 122b, 122d, 122f) ;
un manchon (21) où est logé le tiroir cylindrique (22, 122) de telle manière que le tiroir cylindrique (22, 122) est mobile dans une direction axiale et qui présente un orifice d'entrée (11) et un orifice de sortie (12) et qui présente en outre des parties de petit diamètre (210a, 210a', 210b, 210c, 210d, 210e) dans un intérieur du manchon (21), dans lequel la pression et le débit d'un fluide passant entre les parties d'appui (22b, 22d, 22f, 122b, 122d, 122f) et les parties de petit diamètre (210a, 210a', 210b, 210c, 210d, 210e) sont réglables par mouvement du tiroir cylindrique (22, 122) ;
une pluralité de parties d'ajustement (P) formées comme des espaces entre les parties de petit diamètre (210a, 210a', 210b, 210c, 210d, 210e) du manchon (21) et des parties d'appui (22b, 22d, 22f, 122b, 122d, 122f) du tiroir cylindrique (22, 122) se chevauchant les unes les autres dans une vue depuis une direction radiale du tiroir cylindrique (22, 122) ;
dans lequel le tiroir cylindrique (22, 122) comporte une première partie d'appui (22b, 122b) présentant une surface d'extrémité (22a) d'un côté du tiroir cylindrique (22, 122) dans la direction axiale, une première partie de petit diamètre (22c) formée présentant un diamètre plus petit que la première partie d'appui (22b, 122b), une deuxième partie d'appui (22d, 122d) formée présentant un diamètre plus grand que la première partie de petit diamètre (22c) du tiroir cylindrique (22, 122), et une troisième partie d'appui (22f, 122f) formée présentant un diamètre plus petit que la deuxième partie d'appui (22d, 122d) dans l'ordre d'un côté à l'autre dans la direction axiale,
dans lequel deux des parties d'ajustement (P3, P4) adjacentes présentant l'orifice d'entrée (11) interposé entre elles dans la direction axiale sont définies par une partie d'appui qui est la deuxième partie d'appui (22d, 122d),
**caractérisé en ce que**
le distributeur à tiroir cylindrique (1, 101) comprend en outre une partie de guidage (G) constituée par l'espace entre l'une des parties de petit diamètre (210e) du manchon (21) et la troisième partie d'appui (22f, 122f) qui définissent l'une des parties d'ajustement (P5) présentant l'espace plus petit que chacun des espaces des deux parties d'ajustement (P3, P4) adjacentes présentant l'orifice d'entrée (11) interposé entre elles dans la direction axiale.

2. Distributeur à tiroir cylindrique (1) selon la revendication 1, dans lequel
la partie d'ajustement (P5) constituée par la partie de guidage (G) est prévue axialement adjacente à l'une des deux parties d'ajustement (P3, P4) présentant l'orifice d'entrée (11) interposé entre elles dans la direction axiale.

3. Distributeur à tiroir cylindrique (1) selon la revendication 1 ou 2, dans lequel
la partie d'ajustement (P5) constituée par la partie de guidage (G) présente le plus petit espace entre les parties d'ajustement (P).

4. Distributeur à tiroir cylindrique (1) selon l'une quelconque des revendications 1 à 3, dans lequel
la troisième partie d'appui (22f, 122f) constituant la partie de guidage (G) est celle des parties d'appui (22b, 22d, 22f, 122b, 122d, 122f) disposée le plus près d'un ressort (23) pour solliciter le tiroir cylindrique (22, 122).

5. Distributeur à tiroir cylindrique (1) selon l'une quelconque des revendications 1 à 4, dans lequel
la troisième partie d'appui (22f, 122f) formant partiellement la partie de guidage présente la taille la plus longue dans la direction axiale parmi les parties d'appui (22b, 22d, 22f, 122b, 122d, 122f).
